# EUROPEAN PATENT APPLICATION

(11) **EP 4 589 443 A1**
(43) Date of publication of application: **23.07.2025**
(21) Application number: 24305114.1
(22) Date of filing: 19.01.2024
(51) Int. Cl.: G06F 11/36, G06F 8/41, G05B 19/05

(54) **A METHOD FOR COMPILING A SOURCE CODE INTENDED TO PRODUCE AN EXECUTABLE PROGRAM TO BE EXECUTED ON A PROGRAMMABLE CONTROLLER, APPARATUS, AND COMPUTER PROGRAM**

(71) Applicant: SCHNEIDER ELECTRIC INDUSTRIES SAS, 92500 Rueil-Malmaison (FR)
(72) Inventor: HUGARD, Jean-Francois, 06510 GATTIERES (FR)
(74) Representative: Plasseraud IP

(57) **Abstract**

The disclosure relates to a method for compiling a source code (CS) intended to produce an executable program (FW) to be executed on a programmable controller (CP), said method being implemented by an electronic device comprising at least one processor and a storage space. The method comprises:
- a first compilation step (CS01) in which the lines of code of the source code (CS) are transformed into a plurality of lines of code in an intermediate code (LCI) and in which at least one intermediate line of code of call to a breakpoint control function (FBP) is added, delivering a set of intermediate lines of code called intermediate program (ICP),
- a second compilation step (CS02) in which the intermediate program (ICP) is compiled into a language executable by the programmable controller to produce the executable program (FW).

## Description

### Domain

The disclosure relates to a mechanism for controlling the execution of computer program code in a debugging mode. The disclosure relates more specifically to the control of the execution of computer program code written using one of a IEC61131 language.

### Prior Art

IEC 61131 is a standard for programmable controllers (PLCs) that defines several programming languages for industrial automation. The IEC 61131-3 standard, in particular, defines the following five programming languages: Ladder Diagram (LD), Structured Text (ST), Function Block Diagram (FBD), Instruction List (IL) and Sequential Function Chart (SFC). These programming languages provide flexibility for engineers and programmers to choose the most suitable approach based on the complexity of the control task and their preferences. Programmable logic controllers (PLC) are industrial digital computers used as automation controllers of manufacturing processes, such as assembly lines, or robotic devices. PLCs can simulate the hard-wired relays, timers and sequencers they have replaced, via software that expresses the computation of outputs from the values of inputs and internal memory. In usual PLC software development processes, before programming, specifications of system behaviours are written. Programmers write PLC program which should produce the expected output as a function of the inputs. In addition, programmers need to test whether program satisfies given specifications in a system verification process.

Like in every development process, the programs which are produced needs to be tested before being implemented in production mode. One functionality which is useful for such testing process is the "breakpoint". A breakpoint in program debugging is a designated point in the code where the execution of the program will pause, allowing the developer to inspect the program's state, variables, and other relevant information. Breakpoints are an essential tool for debugging because they enable programmers to interactively analyse and troubleshoot their code during runtime. Breakpoints notably allow performing stepping operations within the code which is efficient to ensure the code is in accordance with programmer expectations.

To implement user breakpoints for IEC61131 languages (and all other compiled languages) current state of the art basically offers two solutions:
- Using hardware resources of some processors that directly implement hardware breakpoint (automatically enter exception mode when reaching a given code address),
- Substitute manually the source opcode at wanted address with an undefined instruction which will cause entering exception mode when reached. This strategy is called software breakpoint.

Until recently, the PLC firmware (i.e. the PLC program implanted in the Programmable logic controllers (PLC)) was written in kernel mode with specific operating systems that allow easy access to exception mode as they mainly execute in kernel of the Operating System of the PLC (Kernel mode, also known as supervisor mode or privileged mode, is a mode of operation in computer systems where the executing code typically has access to all the hardware and can perform any operation). But even in this case, implementing breakpoint requires specific knowledge of processor exception mode and assembly code.

However, due to various considerations, including some important ones linked to cybersecurity threats that factories may encounter, using the kernel mode of operating systems for executing the firmware of controllers is not convenient anymore. It thus desirable, instead, to find solutions to execute these programs in user mode (also called user execution space). This additional constraint prevents the use of processor exception for executing the firmware. While this may not necessarily be an issue while executing the firmware in production mode, this however imposes that a new solution is found for allowing breakpoints to be implemented while executing the firmware in debugging mode.

The disclosure brings a new solution that solves at least some of the aforementioned problems.

### Summary

In consequence, according to a first aspect, the disclosure relates to a method for compiling a source code intended to produce an executable program to be executed on a programmable controller, said method being implemented by an electronic device comprising at least one processor and a storage space. The method comprises:
- a first compilation step in which the lines of code of the source code are transformed into a plurality of lines of code in an intermediate code and in which at least one intermediate line of code of call to a breakpoint control function is added, delivering a set of intermediate lines of code called intermediate program,
- a second compilation step in which the intermediate program is compiled into a language executable by the programmable controller to produce the executable program.

Thus, it is possible, at runtime, when the executable program runs on another device (target device), to implement a fully software breakpoint solution by executing the breakpoint control function which is in charge of checking whether a breakpoint has been added to the execution or not.

According to an aspect of the disclosure, the first compilation step comprises at least one iteration of the following steps:
- a step of obtaining a current line of code from the source code,
- a step of determining whether a breakpoint can be inserted at this current line of code during debugging, and
- if it is determined that the current line of code can be a line within which a breakpoint can be positioned:
   - a step of transforming the current line of code into at least one intermediate line of code,
   - a step of inserting a call line to the breakpoint verification function within the intermediate code file,
   - a step of inserting said at least one intermediate code line, within the intermediate code file, immediately after the call line.

Thus, it is possible to adapt the positioning of the breakpoints as a function either of the source code itself, or as a function of specific predetermined breakpoints the programmer wishes to position. In addition, the determination step can comprise an iteration procedure which automatically excludes some lines of the source code which are not suitable for breakpoints.

According to an aspect of the disclosure, the method comprises a step of obtaining a call identifier value, said call identifier value being used as a parameter of the breakpoint checking function.

Thus, it is possible to precisely identify the locations of various breakpoints as a function of the identifier that has been inserted as parameter to the breakpoint function call.

According to an aspect of the disclosure, the call identifier value is a function of a call context of the breakpoint verification function.

According to an aspect of the disclosure, the call context of the breakpoint verification function is determined as a function of the location of the current line of source code, so that:
- if the current source code line is part of the same function as the previous source code line, the said call identifier value is identical to the previous call identifier value used for the previous source code line,
- if the current line of source code forms part of a function of that of the previous line of source code, the said call identifier value is different from the previous call identifier value used for the previous line of source code.

According to an aspect of the disclosure, said source code is written in one of IEC 61131-3 language.

The method is thus adapted to breakpoint management for a set of specifically real time automata languages.

According to a second aspect, the disclosure relates to a method of executing an executable program obtained using the compilation method presented herein before, said method being implemented by a programmable controller comprising at least one processor and a storage space, said method comprising at least one iteration of:
- executing, by the programmable controller, of a line of executable code calling the breakpoint control function,
- determining, by the breakpoint check function, of the presence of a breakpoint relative to the corresponding line of source code, and
- if a breakpoint is present, transmitting, to an execution module connected to said programmable controller, a current execution stack of the executable program.

According to an aspect of the disclosure, the step of determining, by the breakpoint control function, the presence of a breakpoint comprises a step of attempting to obtain a semaphore so that execution of at least one process of the executable program is stopped when the semaphore is unavailable.

According to a third aspect the disclosure also relates to a device for compiling a source code intended to produce an executable program to be executed on a programmable controller, said method being implemented by an electronic device comprising at least one processor and a storage space. Such device comprises:
- a module for processing a first compilation in which the lines of code of the source code are transformed into a plurality of lines of code in an intermediate code and in which at least one intermediate line of code of call to a breakpoint control function is added, delivering a set of intermediate lines of code called intermediate program,
- a module for processing a second compilation in which the intermediate program is compiled into a language executable by the programmable controller to produce the executable program.

According to another aspect, the disclosure relates to a computer program comprising instructions causing the implementation of the method according as previously presented when such instructions are run by a processor.

According to another aspect, the disclosure relates to a device for generating a computer program to execute on a programmable logic controller, the device comprising modules for managing breakpoints on a controller software (also called a firmware) that is intended to be implemented on a programmable logic controller, and more specifically a module for producing an intermediate code on the basis of an source code, the intermediate code comprising at least one call to a software breakpoint detection function, and a module for managing the execution of the software breakpoint detection function while executing the controller software in a debug mode.

### Drawings

More details are presented in the specification below, with reference to the appended drawings where:
- Figure 1 illustrates the main components of a system according to the disclosure,
- Figure 2 depicts the main steps of the compilation method according to the disclosure,
- Figure 3 depicts the main steps of the execution method according to the disclosure,
- Figure 4 illustrates an example of calls and corresponding stacks managed during execution.

### Description of embodiments

As exposed herein before, an object of the disclosure is to allow source program written in one of a IEC61131 language to be able to operate with breakpoint while executing in a so-called debug mode (also referred to as step-by-step mode) in a user space of execution (in opposition to kernel execution space). It is recalled that, in the boundaries of the disclosure, the user execution space refers to the environment in which user-level applications and processes run on the controller. It is a part of the system's memory that is separate from the kernel space, where the core operating system functions. User space is where application software and some drivers execute, and each user space process runs in its own virtual memory space, typically with restrictions on accessing the memory of other processes. This separation between user space and kernel space is essential for providing memory protection and hardware protection from malicious or erroneous actions.

For clarity purposes, according to the disclosure, the source program (or source code) refers to the high-level programming code which is written in one of a IEC61131 language, and for which a debug execution mode with breakpoint is to be enabled. The intermediate program (or intermediate code) refers to the programming code (for example C or C++) which is obtained from the source program with a first compilation (transformation), also called front-end compilation. The resulting intermediate code stands as an intermediary representation, encapsulating the inherent logic and structural facets of the original source code, along with additional features, as it is detailed below. This representation, amenable to subsequent optimization and conversion, assumes a pivotal role in the management of breakpoints. The firmware (or executable program) refers to the binary files, written in language machine code (e.g., assembler) which is obtained from the intermediate program thru a second compilation, also called back-end compilation, the firmware being uploaded and executed by the controller.

The disclosure thus relates to two main aspects: the first one is to provide a new compilation method which allows inserting some additional data into the binaries which are produced and installed as the firmware of the controller, the second one is to provide an execution method of these binaries, in order to allow a user to add breakpoints during the execution, and perform the conventional stepping operations in this code.

According to the disclosure, stepping operations implies to have a call stack knowledge in the firmware (the binaries uploaded in the controller) when executing the code. The implementation issue with this mode is that it implies, when reaching the breakpoint, to check the calling context. The issue is solved, according to the disclosure, by the use of unique identifiers which are inserted during the first compilation. According to the disclosure, there are three possible stepping operations that are allowed:
- STEP IN: go and stop to next source code line, if the current line is a function call enter this function and stop at the first line of the function,
- STEP OVER: go and stop to next source code line, if the current line is a function call execute the function and stop when returning from function,
- STEP OUT: go and stop when exiting current function.

In short, the method of the disclosure works as the following: in the process of breakpoint management, breakpoints are placed at specific addresses within the compiled binary code, with the entire procedure being handled at the source code level. This involves inserting calls to a designated function for example called *"s_check_breakpoint"* at predetermined locations within the binary code. This insertion process is executed during the first compilation using a compilation module (which may also be used for debugging for example). During runtime (during execution in debug mode), the *"s_check_breakpoint"* function is invoked, and its primary purpose is to calculate the address of the caller. Subsequently, it compares this calculated address with the predefined breakpoint address. If there is a match, it signifies that the executable program has reached the designated breakpoint. To initiate the effective suspension of program execution, a semaphore like mechanism is utilized. More specifically, according to the disclosure, the executable program attempts to acquire a semaphore that is already in a "taken state" when a breakpoint is effectively placed. The utilization of semaphores in this manner allows for the effective suspension of the current task or thread of the executable program. This approach ensures a controlled and synchronized pause in program execution, facilitating the examination and debugging of the code at the breakpoints.

According to the disclosure, as it is explained bellow, the insertion of calls to the designated function *"s_check_breakpoint"* can be done automatically during the first compilation by the compilation module. The compilation module identifies the locations (in the IEC61131 source code) at which breakpoints are possibly insertable (for use during the execution in debugging mode) and, based on these locations, inserts the call to the *"s_check_breakpoint"* function. According to the disclosure, the insertion of calls to the designated function *"s_check_breakpoint"* can also be done manually, by the programmer, before compilation by the compilation module: in this situation, the programmer determines in advance the locations (in the IEC61131 source code) at which he wants the executable program to halt so that he can inspect the various content of variables and parameters relatively to the breakpoint he plans to use.

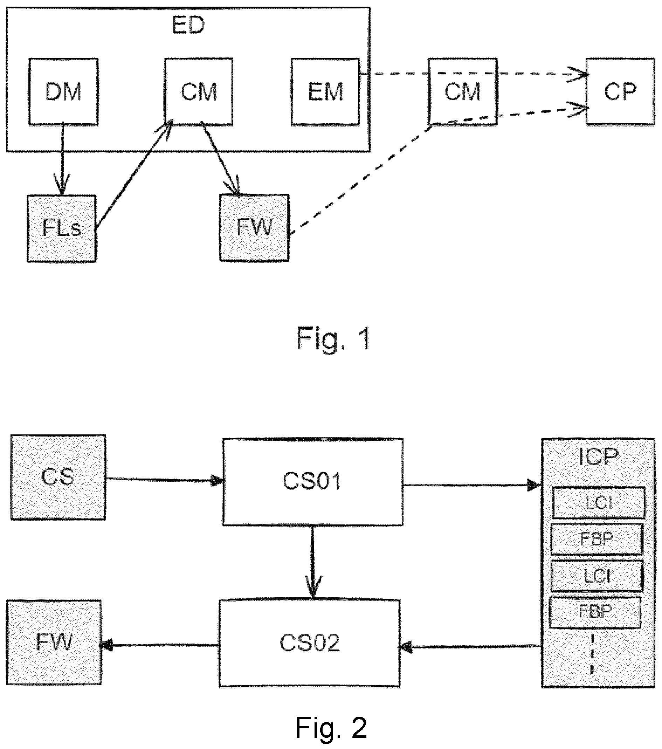

With respect to the disclosure, an exemplary system in which the proposed methods can be implemented is described in relation with figure 1. The exemplary system comprises several components which are able to communicate with each other either via a direct link or via a communication network (wired or wireless). The first component is the compilation module CM, that may be part of a general development environment ED that has to be used by the programmer to create the source program according to a IEC61131 language. For instance, the development environment ED comprises at least one development module DM which allows editing code in one or several of the IEC61131 languages and store the source programs in files FLs. The files FLs are used by the compilation module CM so as to transform the source programs stored in files into the intermediate language (e.g., in C or C++) and then from the intermediate program in the intermediate language into one or several binaries (firmware), which are execution like languages, able to be executed by the programmable controller CP. In a variant, several compilation modules may be used for the first and the second compilation steps, depending on the effective implementation. Once compiled and linked to a given processing target, the binary(ies) is(are) locally stored. The system also comprises a communication module CM (allowing either direct or indirect, as explained herein before) notably to upload binaries to the controller CP, which in the example is used for testing purposes. This controller CP may be a real one or a virtual one, used to mimic (simulate) the functioning of the controller. The binary(ies) is(are) uploaded either on the real controller or on the virtual one. The system also comprises an execution module EM allowing execution of the firmware in normal or debug mode.

On startup, at least one communication channel is built between the controller CP and the execution module EM, allowing both to exchange parameters and data. Notably the execution module EM can instruct the controller to execute all or part of the uploaded (patched) firmware FW and the controller CP is able to transmit all or part of the execution results of the firmware (for example in the form of log lines or the like). According to the disclosure, considering the specific compilation method, which is employed for creating the intermediate program, the execution module EM may also be configured to initiate breakpoints to the execution of the firmware, while the firmware is configured to receive breakpoints identifiers and to stepping instructions from the execution module and transmit relevant execution data (notably content of the variables at breakpoints).

As introduced herein before, an aspect of the disclosure relates to a compilation method, allowing, from a source program produced by a software programmer to obtain the intermediate program. This intermediate program is for example written in C or C++ language. This intermediate language will of course be the one which is suitable for the PLC in question and may vary from one manufacturer to another.

The compilation method of the disclosure is remarkable by the fact that some additional contents are added to the conventional intermediate code which is produced by the state-of-the-art methods. Indeed, in state-of-the-art methods, the intermediate code is also produced from the IEC 61131-3 source program. However, this code is optimized so as to produce an adequate executable program, which means that extraneous materials are not included.

Unlike state-of-the-art methods, the compilation method of the disclosure adds at least one extra line of code in the intermediate code. The extra line(s) of code, with the lines compiled (transformed) from the "source code" created by the programmer, are then compiled from the intermediate code to the binary executable code, by a suitable compiler (which translates intermediate code into assembly language), this assembly language being then converted into the suitable machine code. The compiling/assembling chain (included or not in a module) from the intermediate language to the binary machine code is usually provided by the manufacturer of the PLC. Figure 2 exposes the main steps of the compilation method according to the disclosure. The method comprises:
- a first compilation step CS01 in which the lines of code of the source code CS are transformed into a plurality of lines of code in an intermediate code LCI and in which at least one intermediate line of code of call to a breakpoint control function FBP is added, delivering a set of intermediate lines of code called intermediate program ICP,
- a second compilation step CS02 in which the intermediate program ICP is compiled into a language executable by the programmable controller to produce the executable program FW.

According to an embodiment, the extra lines of code which are added are of two types. The first type is a "function call" FCL, to the dedicated function FBP (the designated function *"s check breakpoint").* The second type are the lines of code which explicit the function FBP which is called by the "function call" FC line. Additional data structure is also added to the intermediate computer program, as well as the necessary additional functions which will facilitate the information exchanges of the firmware with the execution module in order to drive the execution (notably the stepping operations). Thus, the intermediate program comprises, in addition to the lines of code directly obtained from the source program, at least one function call type line, added to the lines of code coming from the source program, several lines of codes which explicit the function FBP which is called and at least one data structure which is used for breakpoint management. The other additional functions, as well as the function FBP, may be available thru a debugging library, which is already compiled, and for which a link is inserted into the intermediate code.

In an embodiment, each line of the lines of code coming from the source program is preceded by a function call FC. Hence, in such an embodiment, as the breakpoints are managed at source code level they are put at specific address of binary (compiled) code. At each of these areas a call to the specific function *"s_check_breakpoint"* is inserted. This insertion is done at compilation level by the compilation module. Thus, while transforming the source code, written in one of the IEC 61131-3 language to a C/C++ program, the following method is processed. The method comprises at least one iteration of the following steps:
- obtaining a current line of code, written in the IEC 61131-3 language,
- determining whether a breakpoint can be inserted at this current line of code during debugging, and
- when it is determined that the current line of code can be a line within which a breakpoint can be positioned:
   - transforming (compiling) the current line of code (CLC) into at least one intermediate line of code (LCI),
   - inserting a call line (FCL) to the breakpoint checking function (FBP) within the intermediate code file (FCI),
   - inserting said at least one intermediate code line (LCI), within the intermediate code file (FCI), immediately after the call line (FCL).

According to the disclosure, as explained above, the call line (FCL) to the breakpoint verification function (FC) comprises, as a parameter of the call to the verification function ("s_check_breakpoint"), an identifier. This identifier is for example an integer, coded according to a pre-parameterised length (for example 16bits or 32 bits). In other words: s_check_breakpoint(uid).

When the call line is inserted, in this implementation, the compiler checks the insertion context of this line of code: either the insertion context is the same as when the previous call line was inserted, in which case the value of the identifier (uid) is identical to that of the previous call line; or the insertion context is different from that when the previous call line was inserted, in which case a different (new) and unique identifier is used. In this second case (a different identifier is used), there are at least two different cases:
- either the new call line is inserted in a new function (i.e. the code that is compiled shows a new function that has not yet been called previously in the code), then a new call identifier value (uid) is generated (because it is a new function that has never been called before)
- or the new call line is inserted within a function that has already been partially processed previously (for example, it is a call line that follows the output of a function), then the value of the identifier previously used for this function that has already been partially processed is retrieved and used as the identifier (uid).

For example and illustration purposes only, the following IEC 61131-3 source code (written in the "structured text" language): 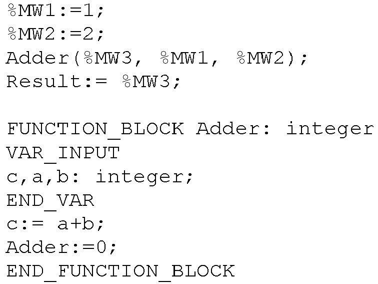 may lead, after compilation in the intermediate language (e.g. C) to the following intermediate code:

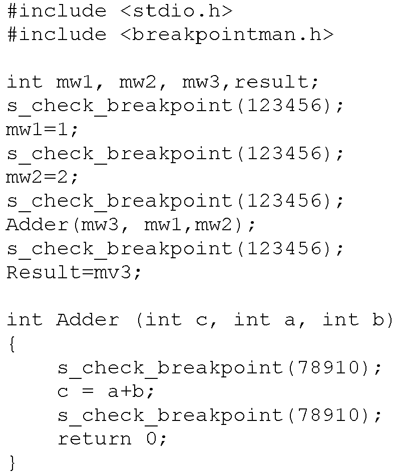

As can be seen from the preceding lines of code, each line that can be associated with a breakpoint in the source language is preceded, in the intermediate code in C langage, by a call to the breakpoint control function. The identifier (uid) passed as a parameter to the call to this function varies according to the context. When in the main program, this identifier takes the example value of "123456" and when in the Adder function, this identifier takes the example value of "78910". This way of preparing the call to the breakpoint control function is interesting because it allows a stack to be built when the code is executed, as will be described below. This makes it possible to manage stepping operations (step over, step in, step out).

Of course, this simplified example of a C language transformation is not exhaustive and is only intended to illustrate the implemented process. In addition to inserting the call lines to the s_check_breakpoint function, the intermediate code program includes the implementation of this "s_check_breakpoint" function as well as the implementation of the data structures and functions required to manage the execution stacks used during stepping operations, in the form of the inclusion of the library "<breakpointman.h>".

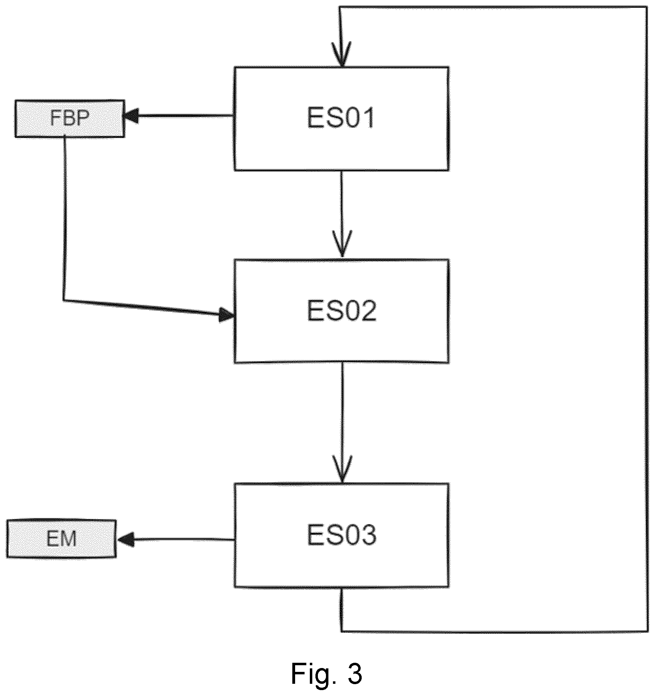

Also, as introduced herein before, the disclosure also relates to a method for managing breakpoints. This method uses the calls to the s_check_breakpoint function to determine whether a stop should be made or not in the execution. The compiled firmware execution method implements an interlock mechanism to stop its execution when breakpoints are effectively present. As explained above, firmware execution (in debug mode, with breakpoints) is carried out via the execution module and the communication channel that enables data to be exchanged between the module and the firmware. Figure 3 exposes the main steps of the execution method according to the disclosure. The method comprises at least one iteration of:
- Executing ES01, by the programmable controller CP, of a line of executable code calling the breakpoint control function FBP;
- Determining ES02, by the breakpoint checking function FBP, of the presence of a breakpoint relative to the corresponding line of source code CS; and
- if a breakpoint is present, transmitting ES03, to an execution module EM connected to said programmable controller, a current execution stack of the executable program FW.

In details, at initiation, the firmware and the execution module exchange the data needed to establish this communication channel. This channel is then used to determine, using the "s_check_breakpoint" function, whether or not it is necessary to stop execution. For instance, when a breakpoint is set, the execution module sends a position to the firmware thru the communication channel. This position indicates the section and line where the breakpoint is set. From this information (i.e. the position), the firmware calculates an address (@BKPT) which corresponds to an assembler instruction in the application code of the firmware. This address instruction corresponds to the first instruction in assembler on the line of the program where the breakpoint is set.

As a reminder, in an exemplary embodiment, each line of the program starts with the ASM_LABEL_DEBUG macro. However, because of the compilation, the assembly instruction calling s_check_breakpoint is just before the first instruction in each line of the program. Note the address of this instruction @FCT. Typical assembly instruction for calling a function:
@FCT: bx r3 (arm) or call 0x30 (intel)
@FCT+4: first instruction after call to s_check_breakpoint

It is therefore possible to deduce the presence of a breakpoint if and only if @FCT + 4 equals @BKPT. It is this equality that s_check_breakpoint tests to stop the program at the required breakpoint. When the @FCT instruction is executed (e.g., "bx r3"), the program switches to the s_check_breakpoint routine. Once B is complete, the 32-bit ARM processor returns to A with the next instruction @FCT+4. It can return because it has previously copied this @FCT+4 address into a special register, the link register (lr) (e.g., "mov Ir, pc"). This register is responsible for storing the return address of a subroutine. A similar mechanism exists for INTEL 32-bit processors. In C, there is a function that retrieves the value contained in this register, whatever the architecture:
At this stage, it is possible with s_check_breakpoint to detect a breakpoint. This allows implementing the options that permit to move forward step by step in the program, as explain herein after. Hence, the operations of the "s_check_breakpoint" function globally comprises:
- a mechanism for stopping execution if a breakpoint is present,
- a mechanism for maintaining knowledge of the execution stack, which is described later, and which uses the unique identifier for the calls of the "s_check_breakpoint" function.

The mechanism for stopping execution in the event of a breakpoint involves the use of a semaphore: when the "s_check_breakpoint" function is executed, it tries to obtain a semaphore which is managed, for example, by the execution module.

If this semaphore can be acquired by the "s_check_breakpoint" function, this means that there is no breakpoint (it can mobilise it for itself). In this case, the function releases the semaphore, and the corresponding line(s) of codes are executed.

If this semaphore cannot be acquired by the "s_check_breakpoint" function, this means that there is a breakpoint. In this case, the "s_check_breakpoint" function is paused until the semaphore is released. At the same time, the contents of the execution stack (i.e. including the firmware execution variables and parameters), which is managed by a parallel firmware process, is transmitted to the execution module so that it can be displayed. Transmission of the execution stack uses the communication channel established at firmware start-up. Once the content has been inspected by the user (the programmer), he has a choice of actions:
- continue execution, without any additional breakpoint: the semaphore is released by the execution module and firmware execution continues,
- continue execution by performing a stepping operation:
   - the semaphore is released by the execution module, then immediately requested after release, again by the execution module,
   - this release triggers the execution of the lines of code corresponding to the breakpoint: the firmware takes advantage of the release of the semaphore by the execution module to take it itself and return it immediately, which enables the "s_check_breakpoint" function to be exited and the following lines of code to be executed. The fact that the firmware returns the semaphore immediately allows the execution module to take back this semaphore and consequently block the next execution of the "s_check_breakpoint" function.

The successive stepping operations that are implemented then consist of a repetition of the two steps presented above. In an alternative or complementary example, rather than the semaphore being taken and released by the execution module, it is managed directly from the firmware itself, via a firmware debugging process that is run in parallel with the main process (the main process being the process that is being debugged). Whatever the location of the semaphore, the firmware debugging process, running in parallel on the controller, may for example be responsible for collecting breakpoint address, coming from the execution module and getting semaphore transmitting it to the main process. It continuously reads breakpoint address (e.g. at predefined intervals). When new data is available, it sends the data to a shared memory location or a message queue that the breakpoint address can access. If no new data is available, it continues to check at regular intervals.

In addition, as explain above, a mechanism for maintaining knowledge of the execution stack is provided. For the stepping operations, the firmware maintains a knowledge of the user call stack when executing a new cycle. This is achieved by the use of unique identifiers that have been inserted while compiling the software. In an exemplary embodiment, when the execution module generates IEC 1131 compiled language it adds a unique identifier (e.g. 32 bits integer) as parameter of s_check_breakpoint function. This identifier is the same within a given function and is guaranteed by construction to be unique for each function.

At execution, the firmware put the first met unique identifier in a LIFO container (last in first out) in the cycle and when s_check_breakpoint is called again, three cases are possible:
- the current id value is the same as the one of the previous call: the call is made in the same function;
- the current id value is different from previous call, but this current id value is present in the LIFO: this means that an exit of a function is performed (so typically execution will stop in case of STEP OUT) and so we remove the previous ID from the LIFO.
- the current id is different from previous and is not present in the LIFO: this means that the execution enters a new function (so in case of STEP OVER execution will not stop at this point but continue execution until the previous id is found again). In this case, the current id is added in the LIFO.

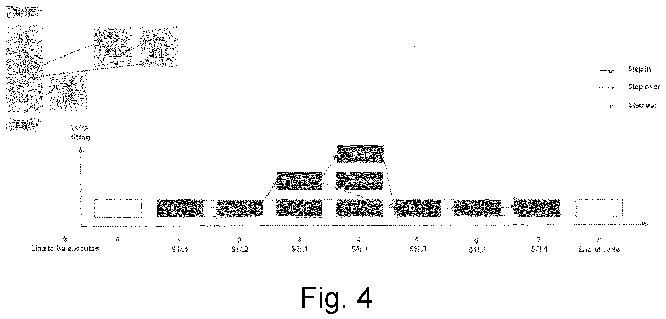

Figure 4 depicts the different cases that can be met relatively to the stepping operations. In the illustrative example of figure 4, one has four sections of source code (S1 to S4) which contains lines of source code (the various Lx), assuming the source code is written in Structed Text. The arrows (in grey) illustrate some possible transitions depending of which STEP operation occurs. For example, depending of STEP operation s_check_breakpoint may stop or not the execution. Example of STEP IN are illustrated from: 2->3 (from S1 to callee S3), and from 3->4 (from S3 to callee S4). Example of STEP OVER is illustrated from: 2->5 (stay in S1 from L2 to L3). Finally, example of STEP OUT is illustrated from: 3->5 (from S3 to caller S1), and from 1->7 (from S1L1 to next S2). The identifiers which are provided as parameters to the s_check_breakpoint function are marked as "ID *Sx".* On can note that on executed line S4L1, the stack (LIFO) comprises variables and parameters from S1, S3 and S4.

In addition, the device DV for generating a computer program FW to execute on a programmable logic controller CP, as presented above, can comprises an antenna system, for example coupled through an interface to a processing circuit including a processor and a memory. Alternatively, or in complement, or as a variant, of the antenna system, necessary data (e.g., source program, predetermined parameters) can also be received thru a communication link allowing the device to generate the computer program FW. The memory stores at least instructions of a computer program according to the present disclosure. By carrying out this type of processing, and in particular by implementing the data structures (filo lists, identifiers, compilation parameters) according to the method of the disclosure, the device's processor has proven to be able to generate the computer program FW comprising the necessary structure to allow breakpoints to be implemented, in an efficient and low weight manner. Such an effect is obviously not possible by attempting to manually intervene on the software in the debug mode, as this would necessitate to access the kernel mode, as explained herein above.

In preferred embodiments, the computer system or device comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the generating method. Alternatively, or in combination thereof, the computer system can comprise one or more programmable logic circuits (FPGA, PLD, etc.), and/or one or more specialized integrated circuits (ASIC), etc., adapted for implementing all or part of said steps of the generating method. In other words, the computer system comprises a set of means configured by software (specific computer program product) and/or by hardware (processor, FPGA, PLD, ASIC, etc.) to implement the steps of the generating method.

## Claims

1. A method for compiling a source code (CS) intended to produce an executable program (FW) to be executed on a programmable controller (CP), said method being implemented by an electronic device comprising at least one processor and a storage space, the method comprising:
- a first compilation step (CS01) in which the lines of code of the source code (CS) are transformed into a plurality of lines of code in an intermediate code (LCI) and in which at least one intermediate line of code of call to a breakpoint control function (FBP) is added, delivering a set of intermediate lines of code called intermediate program (ICP),
- a second compilation step (CS02) in which the intermediate program (ICP) is compiled into a language executable by the programmable controller to produce the executable program (FW).

2. The compilation method as claimed in claim 1, wherein the first compilation step (CS01) comprises at least one iteration of the following steps:
- a step of obtaining a current line of code from the source code (CS),
- a step of determining whether a breakpoint can be inserted at this current line of code during debugging, and
- if it is determined that the current line of code can be a line within which a breakpoint can be positioned:
- a step of transforming the current line of code (CLC) into at least one intermediate line of code (LCI);
- a step of inserting a call line (FCL) to the breakpoint verification function (FBP) within the intermediate code file (FCI);
- a step of inserting said at least one intermediate code line (LCI), within the intermediate code file (FCI), immediately after the call line (FCL).

3. The compilation method according to claim 2, wherein the method comprises a step of obtaining a call identifier value, said call identifier value being used as a parameter of the breakpoint checking function.

4. The compilation method according to claim 3, wherein the call identifier value is a function of a call context of the breakpoint verification function.

5. The compilation method as claimed in claim 4, wherein the call context of the breakpoint verification function is determined as a function of the location of the current line of source code (CLC), so that:
- if the current source code line is part of the same function as the previous source code line, the said call identifier value is identical to the previous call identifier value used for the previous source code line,
- if the current line of source code forms part of a function of that of the previous line of source code, the said call identifier value is different from the previous call identifier value used for the previous line of source code.

6. The method according to any one of claims 1 to 6, wherein said source code is written in one of IEC 61131-3 language.

7. A method of executing an executable program (FW) obtained using the compilation method of any one of claims 1 to 6, said method being implemented by a programmable controller (CP) comprising at least one processor and a storage space, said method comprising at least one iteration of:
- Executing (ES01), by the programmable controller (CP), of a line of executable code calling the breakpoint control function (FBP);
- Determining (ES02), by the breakpoint check function (FBP), of the presence of a breakpoint relative to the corresponding line of source code (CS); and
- if a breakpoint is present, transmitting (ES03), to an execution module (EM) connected to said programmable controller, a current execution stack of the executable program (FW).

8. The execution method according to claim 7, wherein the step of determining, by the breakpoint control function (FBP), the presence of a breakpoint comprises a step of attempting to obtain a semaphore so that execution of at least one process of the executable program (FW) is stopped when the semaphore is unavailable.

9. A device for compiling a source code (CS) intended to produce an executable program (FW) to be executed on a programmable controller (CP), said method being implemented by an electronic device comprising at least one processor and a storage space, the device comprising:
- a module for processing a first compilation in which the lines of code of the source code (CS) are transformed into a plurality of lines of code in an intermediate code (LCI) and in which at least one intermediate line of code of call to a breakpoint control function (FBP) is added, delivering a set of intermediate lines of code called intermediate program (ICP),
- a module for processing a second compilation in which the intermediate program (ICP) is compiled into a language executable by the programmable controller to produce the executable program (FW).

10. A computer program comprising instructions causing the implementation of the method according to anyone of the preceding claims when such instructions are run by a processor.
